**Europäisches Patentamt**

**European Patent Office**

**Office européen des brevets**

(11) Veröffentlichungsnummer: **0 326 833 B1**

# EUROPÄISCHE PATENTSCHRIFT

(45) Veröffentlichungstag der Patentschrift:
**11.09.91 Patentblatt 91/37**

(51) Int. Cl.⁵: **F28D 5/00, B64G 1/58, F25D 7/00**

(21) Anmeldenummer: **89100595.1**

(22) Anmeldetag: **13.01.89**

(54) **Verdunstungskühler.**

(30) Priorität: **05.02.88 DE 3803534**

(43) Veröffentlichungstag der Anmeldung:
**09.08.89 Patentblatt 89/32**

(45) Bekanntmachung des Hinweises auf die
Patenterteilung:
**11.09.91 Patentblatt 91/37**

(84) Benannte Vertragsstaaten:
**DE FR GB IT**

(56) Entgegenhaltungen:
**GB-A- 2 129 924**
**US-A- 2 766 597**
**US-A- 3 180 111**

(56) Entgegenhaltungen:
**US-A- 4 161 212**
**PATENT ABSTRACTS OF JAPAN, Band 7, Nr. 211 (M-243)[1356], 17. September 1983; & JP-A-58 106 387 (RIKIO TATSUMI) 24-06-1983**

(73) Patentinhaber: **Ernst, Günter, Prof. Dr.-Ing.**
**57, Strasse des Roten Kreuzes**
**W-7500 Karlsruhe 41 (DE)**

(72) Erfinder: **Ernst, Günter, Prof. Dr.-Ing.**
**57, Strasse des Roten Kreuzes**
**W-7500 Karlsruhe 41 (DE)**

(74) Vertreter: **Liesegang, Roland, Dr.-Ing. et al**
**FORRESTER & BOEHMERT**
**Widenmayerstrasse 4 Postfach 22 01 37**
**W-8000 München 22 (DE)**

## Beschreibung

Die Erfindung betrifft einen Verdunstungskühler mit den Merkmalen des Oberbegriffs des Anspruchs 1.

Es ist bekannt, daß ein Gegenstand dadurch gekühlt werden kann, daß Flüssigkeit — in Ausnahmefällen auch fester Stoff — an seiner Oberfläche verdunstet wird. Beispielsweise bei Flugkörpern im Weltraum ist dies neben der Abstrahlung eine wichtige Rückkühlmethode für den Kühlkreislauf der Elektronik oder der Klimaanlage, für Hydrauliköl und dgl., weil dort bekanntlich keine Umgebungsluft zur Aufnahme abzugebender Wärme zur Verfügung steht. Aber auch in anderen Fällen, in denen zu kühlende Körper von Luft umgeben sind, kann die Verdunstung den Kühlprozeß stark intensivieren. Weltraumfahrzeuge, die mit Verdunstungskühlern ausgerüstet sind, setzen ihre Verdunstungskühler auch bei Start und Landung ein und emittieren den entstehenden Dampf in die Atmosphäre.

Bei einem bekannten Verdunstungskühler der im Oberbegriff des Anspruchs 1 genannten Art (US-A-2766597) ist die Leitung außerhalb des Kanals und parallel dazu verlegt. Die Kapillarschicht umgibt sowohl den Kanal als auch die Leitung. Der flüssige Stoff, z.B. Wasser, tritt über Bohrungen aus der Leitung aus und füllt den Zwischenraum zwischen Kapillarschicht und Kanalwand. Der so gebildete Flüssigkeitsmantel in dem Zwischenraum behindert die Wärmeabfuhr von der Kanalwand nach außen. Außerdem ist die Anordnung wegen der Parallelität der Leitung und des Kanals sperrig und nur schwer mit der Kapillarschicht zu umgeben.

Der Erfindung liegt die Aufgabe zugrunde, einen Verdunstungskühler mit den Merkmalen des Oberbegriffs des Anspruches 1 zu schaffen, der einfach im Aufbau ist, und für sich allein eingesetzt oder zu größeren Einheiten zusammengefügt werden kann und geringes Gewicht und geringes Volumen hat.

Zur Lösung dieser Aufgabe dienen die Merkmale des Anspruches 1.

Vorteilhafte Ausgestaltungen der Erfindung sind in den Unteransprüchen angegeben.

Ein Verdunstungskühler nach der Erfindung eignet sich insbesondere zum Einsatz in Weltraumfahrzeugen wo es besonders auf geringes Gewicht, geringes Volumen und sichere Funktion ankommt.

Die folgenden Vorteile und Möglichkeiten bietet der Verdunstungskühler jedoch auch unabhängig von der Anwendung im Weltraum bei allen anderen denkbaren Anwendungsfällen :

— Ein Gesamt-Kühlsystem kann durch Unterteilung in Untereinheiten gut angepaßter Größe bereitgestellt werden, die mit verschiedener Last, auf verschiedenem Temperaturniveau, in veschiedener Betriebsweise und für verschiedene Zwecke eingesetzt werden können.

— Das abzukühlende Fluid kann einen hohen Druck haben, ohne daß es durch Kanalwände großer Dicke eingeschlossen werden muß.

— Es ergibt sich ein geringes Gesamtgewicht, weil das Verhältnis aus Wandstärke der Kanäle zu verdunstender Kühloberfläche klein ist.

— Es ergibt sich ein geringes Volumen des Kühlsystems, das zudem in Form und Aufteilung den gegebenen Bedingungen weitgehend angepaßt werden kann.

— Die Zuordnung der Elemente zueinander kann so gestaltet werden, daß der entstehende Dampf weitgehend frei in die Umgebung abströmen kann.

— Geringes Innenvolumen der Flüssigkeitszuleitungen zwischen dem Ort der regelnden Absperrung oder Drosselung durch die erfindungsgemäßen Flüssigkeitsverbinder und der verdunstenden Oberfläche gewährleistet eine schnelle Regelung der Verdunstungsleistung und schnelle Ein- und Ausschaltung.

— Es wird ein niedriger Lieferdruck der zu verdunstenden Flüssigkeit benötigt.

— Restlose Verdampfung der Flüssigkeit an der zu kühlenden Oberfläche ist gewährleistet, weil nicht durch Blasenbildung in der Flüssigkeit in der Kapillarschicht Flüssigkeit weggeschleudert wird oder von außen aufgesprühte Tropfen abprallen.

— Leichte serienmäßige Herstellung relativ einfacher und kleiner Einzelelemente ist möglich.

— Gute und leichte Kontrolle, Wartung und Reparatur und leichter Austausch von Einzelelementen sind ermöglicht durch offenliegende Einzelelemente und außen auf den Elementen sichtbare und zugängliche Verdunstungsflächen.

— Der dünne Flüssigkeitsfilm und die gute Wärmeleitung der Kapillarschicht, wenn diese beispielsweise aus geeignetem Drahtgewebe besteht, gewährleisten einen guten Wärmedurchgang vom abzukühlenden Fluid zur verdampfenden Flüssigkeitsoberfläche.

Die Erfindung ist im folgenden anhand schematischer Zeichnungen an Ausführungsbeispielen mit weiteren Einzelheiten näher erläutert. Es zeigen :

Fig. 1    einen Längsschnitt durch ein Kühlelement eines Verdunstungskühlers nach der Erfindung ;

Fig. 2    einen Querschnitt nach der Linie II-II in Fig. 1 ;

Fig. 3    einen Querschnitt ähnlich Fig. 2 durch ein abgewandeltes Kühlelement gemäß der Erfindung.

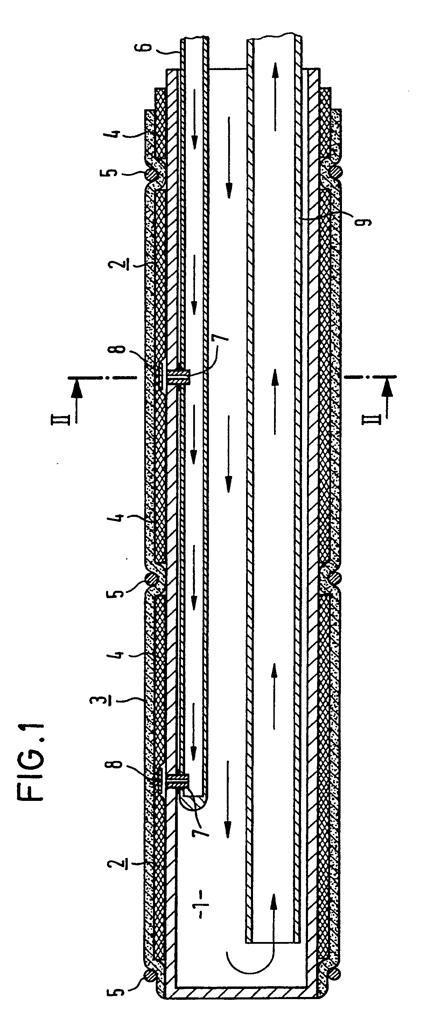

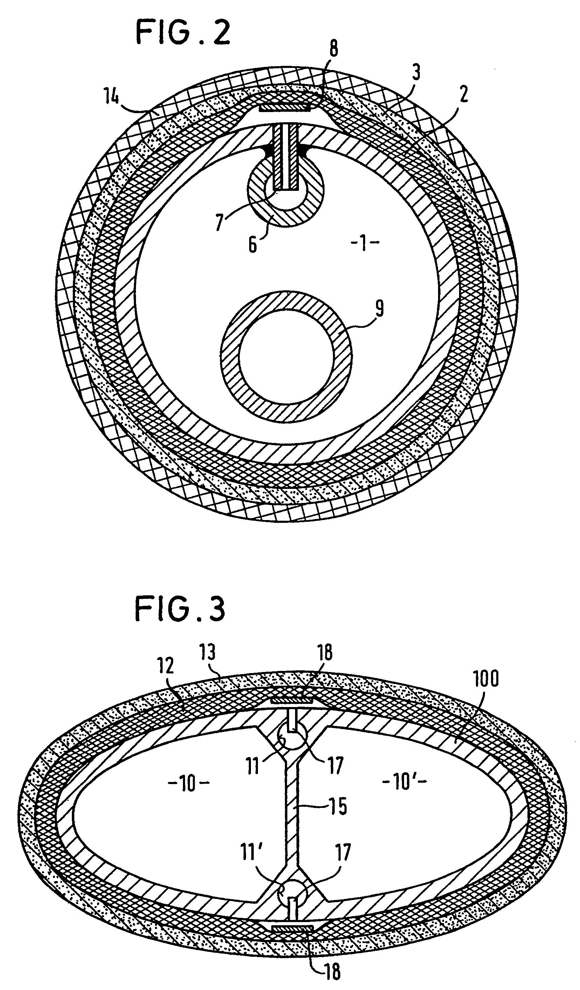

Gemäß Fig. 1 und 2 ist ein Kanal 1, der als Kreisrohr mit relativ geringer Wandstärke einen hohen Druck des in ihm strömenden, abzukühlenden Fluids, z.B. Hydrauliköls, Kühlwassers oder eines anderen Wärmeträgers, aushält, von einer porösen Kapillarschicht 2 umgeben, die ihrerseits von einer Flüssigkeitssperrschicht 3 umgeben ist. Die Kapillarschicht kann aus feinmaschigem Drahtgewebe bestehen (Maschenöffnung und Drahtstärke im allgemeinen kleiner als 1 mm), das ringförmig auf den Kanal 1 gespannt, schraubenförmig auf den Kanal gewickelt oder als Schlauch bei geeigneter Webart durch Längsdehnung und Querkontraktion auf den Kanal "aufgeschrumpft" ist. Zur guten Fixierung und zum besseren Wärmekontakt kann der Draht des Gewebes dort, wo er die Kanalwand berührt, punktartig festgelötet oder festgeklebt sein. Damit Schwerkräfte oder Trägheitskräfte, die längs des Kanals 1 wirken, in der Flüssigkeit, die sich in der Kapillarschicht 2 befindet, keine größeren statischen Druckdifferenzen aufbauen können, ist die Kapillarschicht in einzelne Ringe 4 unterteilt. Damit solche Druckdifferenzen nicht durch Flüssigkeitssäulen in den Flüssigkeitszuleitungen entstehen können, werden die Kanäle 1 vorteilhafterweise so montiert, daß ihre Längsachsen senkrecht zu den zu erwartenden Schwerkräften und Trägheitskräften liegen.

Auf die Kapillarschicht 2 ist ein Gewebe aus einem nicht von der Flüssigkeit benetzbaren Material als Flüssigkeitssperrschicht 3 ringförmig gespannt, bindenartig gewickelt oder schlauchartig durch Längsdehnung aufgespannt. Wird Wasser als zu verdunstende Flüssigkeit verwendet, was sich insbesondere bei der Anwendung im Weltraum anbietet, besteht dieses Gewebe beispielsweise aus Teflonfäden oder mit Teflon beschichteten Fäden.

In Anwendungsfällen auf der Erde oder erdnah (in Flugzeugen) wird vorteilhafterweise Ammoniak als zu verdunstender Stoff und ein davon nicht benetzbarer und angreifbarer Kunststoff für das Gewebe der Flüssigkeitssperrschicht 3 eingesetzt.

Wenn die Kapillarschicht 2 in einzelne ringförmige Bereiche 4 unterteilt ist, kann die Flüssigkeitssperrschicht 3 an den Grenzen durch Fäden oder Drähte 5 auf die dort freiliegende Kanalwand oder auf die dort kompakt zusammengepreßte Kapillarschicht 2 fixiert werden. Auf die Darstellung eines über die Flüssigkeitssperrschicht gezogenen, diese gegen den Flüssigkeitsdruck stabilisierenden, grobmaschigeren und mechanisch stabileren Stützgewebes 14 (Fig. 2) ist in Fig. 1 zugunsten der Übersichtlichkeit verzichtet.

Im Kanal 1 ist eine Leitung 6 für die Zuführung der zu verdunstenden Flüssigkeit vorgesehen. Die Leitung 6 ist zumindest im Bereich ihrer Austrittsöffnung so mit der Kanalwand verbunden, beispielsweise angelötet, daß abzukühlendes Fluid und zu verdunstende Flüssigkeit getrennt bleiben. Zur gezielten Drosselung der Flüssigkeit sind in die Austrittsöffnungen der Leitung 6 Kapillarröhrchen 7 angemessenen Durchmessers und angemessener Länge eingesetzt.

Leitplättchen 8 aus Blech, die auf der Kanalwand fixiert sind, leiten den austretenden Flüssigkeitstrom in die Richtung, in der die Kapillarschicht 2 auf der äußeren Oberfläche des Kanals 1 läuft.

Wenn Kanäle 1, Leitungen 6 etc. Kühlelemente bilden, die fingerförmig an einem ihrer Enden angeschlossen sind (wie gezeigt), ist ein zusätzliches Rohr 9 integriert, das — am Ende offen — das zu kühlende Fluid zu- oder ableitet.

Wenn mit solchen fingerförmigen Kühlelementen von beispielsweise 12 mm Außendurchmesser und beispielsweise 300 mm Länge eine verdunstende Kühlfläche von beispielsweise 1 m² gebildet werden soll, muß man ungefähr 90 Kühlelemente zu einer Einheit verbinden. Diese Elemente kann man so anordnen, daß sie den entstehenden Dampf leicht abströmen lassen und daß sie eine Einheit oder mehrere Untereinheiten bilden, die bei einem geringen Gesamtvolumen in ihrer Form an die äußeren Bedingungen angepaßt sind und die vorteilhafterweise so angeordnet sind, daß die Längsachsen der Elemente eine gewünschte Richtung haben, um höhere hydrostatische Druckunterschiede in der Flüssigkeit zu vermeiden.

Fig. 2 zeigt ein Kühlelement in einer ausgeführten Konstruktion, bei der ein stranggepreßtes Profil 100 zwei Kanäle 10, 10' bildet, die durch eine Trennwand 15 getrennt sind. Die Kanäle 10 bzw. 10' können beispielsweise zur Zuführung der zu kühlenden Flüssigkeit bzw. zur Abführung dienen. Im Bereich der Enden der Trennwand 15 sind Leitungen 11, 11' zum Zuführen der zu verdunstenden Flüssigkeit integriert, die auch in diesem Beispiel über Kapillarröhrchen 17 zu einer Kapillarschicht 12 münden, die im Bereich der Austrittsöffnungen der Kapillarröhrchen 17 aufgeweitet ist und dort Leitbleche 18 zum gleichmäßigen Verteilen der austretenden Flüssigkeit über die Kapillarschicht 12 aufweist.

Wie bei dem Ausführungsbeispiel nach den Fig. 1 und 2 ist die Kapillarschicht 12 von einer Flüssigkeitssperrschicht 13 gleichen Aufbaus wie die Schicht 3 bei dem Ausführungsbeispiel nach den Fig. 1 und 2 umgeben, und diese ist ihrerseits von einem Stützgewebe entsprechend dem Stützgewebe 14 (Fig. 2) umgeben (in Fig. 3 nicht gezeichnet).

Fig. 3 zeigt nur eine der mannigfachen Gestaltungsmöglichkeiten hinsichtlich der Querschnittsausbildung eines mit Verdunstungskühlung arbeitenden Kühlelementes gemäß der Erfindung. Diese Gestaltungsmöglichkeit ist auch in Längsrichtung der Kühlelemente vorhanden, so daß diese auch an begrenzte räumliche Gegebenheiten, wie sie insbesondere in Weltraumfahrzeugen vorhanden sind, angepaßt werden können.

EP 0 326 833 B1

Alternativ zu den beschriebenen Ausführungen kann auf die Flüssigkeitssperrschicht 3 bzw. 13 ganz verzichtet werden, wenn die Kapillarschicht 2 bzw. 12 und die Flüssigkeitsverbinder 7, 17 so gestaltet sind, daß die äußere Oberfläche der Kanäle 1 allein durch die Kapillarkräfte von zu verdunstender Flüssigkeit benetzt und die Flüssigkeit im übrigen durch die Kapillarkräfte in den Kapillaren der porösen Kapillarschicht 2 bzw. 12 festgehalten wird.

**Patentansprüche**

1. Verdunstungskühler, bei dem zum Kühlen eines in mindestens einem Kanal (1, 10, 10') fließenden Fluids auf der Außenseite des Kanals in einer den Kanal umgebenden Kapillarschicht (2, 12) ein Stoff verdampft, der in flüssiger Form durch mindestens eine Leitung (6, 11, 11') zugeführt wird, dadurch **gekennzeichnet,** daß die Leitung (6, 11, 11')in dem Kanal (1, 10, 10') angeordnet ist, und daß wenigstens ein Flüssigkeitsverbinder (7, 17) zum dosierten Leiten des Stoffes aus der Leitung (6, 11, 11') zur Außenseite des Kanals (1, 10, 10') in die Kapillarschicht (2, 12) vorgesehen ist.

2. Verdunstungskühler nach Anspruch 1, dadurch **gekennzeichnet,** daß die Flüssigkeitsverbinder (7, 17) an den Austritten der Leitung (6, 11, 11') so ausgeführt sind, — beispielsweise sternförmig — , daß die Oberfläche der Kanäle (1, 10, 10') nur durch die Kapillarkräfte in der Kapillarschicht (2, 12) von Flüssigkeit benetzt wird und die Flüssigkeit durch die Kapillarkräfte festgehalten wird.

3. Verdunstungskühler nach Anspruch 1, dadurch **gekennzeichnet,** daß die Kapillarschicht (2, 12) von einer gasdurchlässigen Flüssigkeitssperrschicht (3, 13) bedeckt ist.

4. Verdunstungskühler nach Anspruch 3, dadurch **gekennzeichnet,** daß die Flüssigkeitssperrschicht (3, 13) aus Sintermaterial oder einem Gewebe eines von der Flüssigkeit nicht benetzbaren Stoffes, insbesondere eines Kunststoffes wie Tetrafluoräthylene, besteht.

5. Verdungstungskühler nach Anspruch 3 oder 4, dadurch **gekennzeichnet,** daß die Flüssigkeitssperrschicht (3, 13) auf die Kapillarschicht (2, 12) aufgeklebt oder aufgesintert ist.

6. Verdunstungskühler nach einem der Ansprüche 3 bis 5, dadurch **gekennzeichnet,** daß die Flüssigkeitssperrschicht (3, 13) dort, wo die Außenwand der Kanäle eben oder nach außen gwölbt ist, über die Kapillarschicht (2, 12) gespannt ist.

7. Verdunstungskühler nach einem der Ansprüche 3 bis 6, dadurch **gekennzeichnet,** daß die Flüssigkeitssperrschicht (3, 13) schlauchartig ausgebildet und auf den Kanal (1, 10, 10') gezogen ist oder bandartig ausgebildet und auf den Kanal (1, 10, 10') gewickelt ist.

8. Verdunstungskühler nach einem der Ansprüche 3 bis 7, dadurch **gekennzeichnet,** daß die Flüssigkeitssperrschicht (3, 13) aus einer feinporigen, dünnen Schicht mit relativ großer offener Querschnittsfläche gesteht, die von einer darüberliegenden mechanisch stabilen, großporigen Stützschicht (14) gehalten wird.

9. Verdunstungskühler nach einem der Ansprüche 3 bis 8, dadurch **gekennzeichnet,** daß die Kapillarschicht (2) in Bereiche (4) aufgeteilt ist, die beispielsweise waben- oder ringförmig ausgebildet sind, wobei diese Bereiche (4) von der Flüssigkeitssperrschicht (3, 13) begrenzt sind, so daß sich durch Schwerkräfte oder Trägheitskräfte, die tangential zur Außenfläche der Kanäle wirken, keine großen Druckunterschiede in der Flüssigkeit eines Bereiches aufbauen können.

10. Verdunstungskühler nach Anspruch 9, dadurch **gekennzeichnet,** daß die Kapillarschicht (2, 12) eines Bereiches (4) innen durch die Wand des Kanals (1, 10, 10'), außen durch die Flüssigkeitssperrschicht (3, 13) und an den axialen Grenzen zu Nachbarbereichen durch Anschließen der Flüssigkeitssperrschicht (3, 13) an die Kanalwand eingeschlossen ist.

11. Verdunstungskühler nach einem der Ansprüche 3 bis 10, dadurch **gekennzeichnet,** daß mehrere Kanäle (10, 10') und mehrere Leitungen (11, 11') in einem insbesondere stranggepreßten Profilrohr (100) vereinigt sind, das von der Kapillarschicht (12) und der Flüssigkeitssperrschicht (13) umgeben ist.

12. Verdunstungskühler nach einem der vorangehenden Ansprüche, dadurch **gekennzeichnet,** daß die Kapillarschicht (2, 12) aus Sintermaterial, Drahtgewebe oder dgl. besteht und durch Löten, Schweißen, Kleben oder dgl. mit der Außenseite des Kanals (1, 10, 10') verbunden ist.

13. Verdunstungskühler nach einem der vorangehenden Ansprüche, dadurch **gekennzeichnet,** daß die Austrittsöffnungen der Flüssigkeitsverbinder (7, 17) so über die Außenfläche des oder jedes Kanals (1, 10, 10') verteilt sind, daß die Flüssigkeit in der Kapillarschicht (2, 12) gleichmäßig über diese Außenfläche verteilt wird.

14. Verdunstungskühler nach einem der vorangehenden Ansprüche, dadurch **gekennzeichnet,** daß der aus den Austrittsöffnungen tretende Strom der Flüssigkeit so gerichtet ist oder durch Hilfseinrichtungen (Leitbleche 8, 18) so gelenkt wird, daß er tangential zur äußeren Oberfläche des oder jedes Kanals (1) in die Kapillarschicht (2) eintritt.

15. Verdunstungskühler nach einem der vorangehenden Ansprüche, dadurch **gekennzeichnet,** daß die

4

Flüssigkeitsverbinder (7, 17) von die Wand der Leitungen (6, 11, 11') durchsetzenden Kapillarröhrchen gebildet sind, deren Strömungwiderstand durch Wahl von Länge und/oder Durchmesser derart variierbar ist, daß die gewünschte Aufteilung der Flüssigkeit erreicht wird.

16. Verdunstungskühler nach einem der vorangehenden Ansprüche, dadurch **gekennzeichnet**, daß sich ein zusätzliches Rohr (9) in einem Kanal (1) befindet, durch das das Fluid zu- oder abgeleitet wird, wenn der Kanal (1) fingerartig ausgebildet und einseitig angeschlossen ist.

17. Verdunstungskühler nach einem der vorangehenden Ansprüche, dadurch **gekennzeichnet**, daß zusätzliche Leitungen mit entsprechenden Eintrittsöffnungen zum Rückleiten der Flüssigkeit aus der Kapillarschicht vorgesehen sind.

18. Verdunstungskühler nach einem der vorangehenden Ansprüche, dadurch **gekennzeichnet**, daß die Kanale (1, 10, 10') und Leitungen (6, 11, 11') eines fingerartig montierten Elements, das mehrere Kanäle und Leitungen enthält, als Zu- und Rückleitungen des Fluids und/oder der Flüssigkeit verwendet werden.

19. Verdunstungskühler nach einem der Ansprüche 3 bis 18, dadurch **gekennzeichnet**, daß die Flüssigkeitssperrschicht von einer nicht benetzbaren Imprägnierung oder von einer nicht benetzbaren porösen Beschichtung der äußeren Oberfläche der Kapillarschicht gebildet ist.

## Claims

1. Evaporative cooler which for the purpose of cooling a fluid flowing within at least one duct evaporates a substance on the outside of said duct in a capillary layer (2, 12) surrounding said duct, said substance being supplied in liquid form through at least one conduit, characterized in that said conduit (6, 11, 11') is integrated in said duct (1, 10, 10'), and that at least one liquid connector (7) for controlled passage of the liquid from the conduit (6, 11, 11') to the outside of said duct (1, 10, 10') into said capillary layer (2, 12) is provided.

2. Evaporative cooler as claimed in claim 1, characterized in that the liquid connectors (7, 17) at the outlets of the conduit (6, 11, 11') are configured in such a way — for example star-like — that the surface of the ducts (1, 10, 10') is wetted by liquid only due to the capillary forces in the capillary layer (2, 12) while the liquid is retained by the capillary forces.

3. Evaporative cooler as claimed in claim 1, characterized in that the capillary layer (2, 12) is covered by a gas-permeable liquid barrier (3, 13).

4. Evaporative cooler as claimed in claim 3, characterized in that the liquid barrier (3, 13) is formed of sintered material or of a fabric of a material that is non-wettable by the liquid, especially of a synthetic material such as tetrafluoroethylene.

5. Evaporative cooler as claimed in claim 3, characterized in that the liquid barrier (3, 13) is adhesively bonded or sintered to the capillary layer (2, 12).

6. Evaporative cooler as claimed in claim 3, characterized in that the liquid barrier (3, 13) is stretched across the capillary layer (2, 12) where the outer wall of the ducts is planar or outwardly curved.

7. Evaporative cooler as claimed in one of claims 3 to 6, characterized in that the liquid barrier (3, 13) is tubular and fitted onto the duct (1, 10, 10') or is of tape-like structure and wound onto the duct (1, 10, 10').

8. Evaporative cooler as claimed in one of claims 3 to 7, characterized in that the liquid barrier (3, 13) is formed of a fine-pore thin layer having a relatively large open cross-sectional area, said layer being retained by a superimposed, mechanically stable, large-pore backing layer (14).

9. Evaporative cooler as claimed in one of claims 3 to 8, characterized in that the capillary layer (2) is divided into sections (4) which have honeycomb-like or annular design, for example, said sections (4) being bounded by the liquid barrier (3, 13) so that the development of major pressure differences in the liquid of a section as caused by forces of gravitation or inertia acting tangentially to the outer surface of the ducts is prevented.

10. Evaporative cooler as claimed in claim 9, characterized in that the capillary layer (2, 12) of a section (4) is confined internally by the wall of the duct (1, 10, 10') and externally by the liquid barrier (3, 13) and at the axial boundaries with adjacent sections by connection of the liquid barrier (3, 13) to the duct wall.

11. Evaporative cooler as claimed in one of claims 3 to 10, characterized in that a plurality of ducts (10, 10') and a plurality of conduits (11, 11') are combined in a section tube, especially an extruded section tube (100) which is surrounded by the capillary layer (12) and the liquid barrier (13).

12. Evaporative cooler as claimed in one of the preceding claims, characterized in that the capillary layer (2, 12) is formed of sintered material, screen fabric or the like and is joined to the outside of the duct (1, 10, 10') by soldering, welding, adhesive bonding or the like.

13. Evaporative cooler as claimed in one of the preceding claims, characterized in that the outlet openings of the liquid connectors (7, 17) are distributed across the outer surface of the or each duct (1, 10, 10') in such a way that the liquid within the capillary layer (2, 12) is uniformly distributed across said outer surface.

14. Evaporative cooler as claimed in one of the preceding claims, characterized in that the flow of liquid exiting from the outlet openings is directed in such a way or is guided by auxiliary means (baffle plates 8, 18) in such a way that it enters the capillary layer (2) tangentially to the outer surface of the or each duct (1).

15. Evaporative cooler as claimed in one of the preceding claims, characterized in that the liquid connectors (7, 17) are formed by capillary tubes passing through the walls of the conduits (6, 11, 11'), the flow resistance of said capillary tubes being variable by suitable selection of length and/or diameter such that the desired liquid distribution is achieved.

16. Evaporative cooler as claimed in one of the preceding claims, characterized in that an additional tube (9) is provided in a duct (1) through which the fluid is supplied or discharged when the duct (1) is of finger-like configuration and is connected on one side.

17. Evaporative cooler as claimed in one of the preceding claims, characterized in that additional conduits with corresponding inlet openings are provided for returning the liquid from the capillary layer.

18. Evaporative cooler as claimed in one of the preceding claims, characterized in that the ducts (1, 10, 10') and conduits (6, 11, 11') of a finger-like mounted element, which comprises several ducts and conduits, are used as supply and return conduits for the fluid and/or the liquid.

19. Evaporative cooler as claimed in one of the preceding claims, characterized in that the liquid barrier is formed by a non-wettable impregnation or by a non-wettable porous coating of the outer surface of the capillary layer.

## Revendications

1. Réfrigérant par évaporation, dans lequel, pour refroidir un fluide s'écoulant dans un moins un canal (1, 10, 10'), une substance, qui arrive sous forme liquide par au moins un conduit (6, 11, 11'), s'évapore sur le côté extérieur du canal dans une couche capillaire (2, 12) enveloppant le canal, caractérisé en ce que le conduit (6, 11, 11') est disposé dans le canal (1, 10, 10') et en ce qu'au moins un raccord pour le liquide (7, 17) est prévu pour diriger à débit dosé la substance du conduit (6, 11, 11') vers le côté extérieur du côté du canal (1, 10, 10') et dans couche capillaire (2, 12).

2. Réfrigérant par évaporation selon la revendication 1, caractérisé en ce que les raccords pour le liquide (7, 17) sont réalisés — par exemple en étoile — aux sorties du conduit (6, 11, 11') de manière que la surface des canaux (1, 10, 10') ne soit mouillée par du liquide que par les forces capillaires s'exerçant dans la couche capillaire (2, 12) et que le liquide soit immobilisé par les forces capillaires.

3. Réfrigérant par évaporation selon la revendication 1, caractérisé en ce que la couche capillaire (2, 12) est recouverte d'une couche (3, 13) d'arrêt du liquide qui est perméable aux gaz.

4. Réfrigérant par évaporation selon la revendication 3, caractérisé en ce que la bouche d'arrêt du liquide (3, 13) consiste en une matière frittée ou en un tisu d'une matière non mouillable par le liquide, en particulier d'une matière plastique telle que le tétrafluoréthylène.

5. Réfrigérant par évaporation selon la revendication 3 ou 4, caractérisé en ce que la couche d'arrêt du liquide (3, 13) est collée ou agglomérée par frittage sur la couche capillaire (2, 12).

6. Réfrigérant par évaporation selon l'une des revendications 3 à 5, caractérisé en ce que la couche d'arrêt du liquide (3, 13) est tendue sur la couche capillaire (2, 12) aux emplacements auxquels la paroi extérieure des canaux est plane ou bombée vers l'extérieur.

7. Réfrigérant par évaporation selon l'une des revendications 3 à 6, caractérisé en ce que la couche d'arrêt du liquide (3, 13) est réalisée sous la forme d'un tube souple et étirée sur le canal (1, 10, 10') ou est réalisée en bande et enroulée sur le canal (1, 10, 10').

8. Réfrigérant par évaporation selon l'une des revendications 3 à 7, caractérisé en ce que la couche d'arrêt du liquide (3, 13) consiste en une couche poreuse mince dont la surface de la section ouverte est relativement grande et qui est tenue par une couche sur-jacente de soutien (14) ayant des gros pores et de la stabilité mécanique.

9. Réfrigérant par évaporation selon l'une des revendications 3 à 8, caractérisé en ce que la couche capillaire (2) est répartie dans des régions (4) ayant par exemple une conformation en nids d'abeilles ou annulaire, ces régions (4) étant délimitées par la couche d'arrêt du liquide (3, 13) de manière que les forces de gravité ou les forces d'inertie qui agissent tangentiellement à la surface extérieure des canaux ne puissent pas créer de grandes différences de pression dans le liquide d'une région.

10. Réfrigérant par évaporation selon la revendication 9, caractérisé en ce que la couche capillaire (2, 12) d'une région (4) est confinée intérieurement par la paroi du canal (1 10, 10'), extérieurement par la couche d'arrêt du liquide (3, 13) et aux frontières axiales avec les régions voisines, par jonction de la couche d'arrêt du liquide (3, 13) avec la paroi du canal.

11. Réfrigérant par évaporation selon l'une des revendications 3 à 10, caractérisé en ce que plusieurs canaux (10, 10') et plusieurs conduits (11, 11') sont réunis dans un tube profilé (100), en particulier extrudé, qui est entouré par la couche capillaire (12) et la couche d'arrêt du liquide (13).

12. Réfrigérant par évaporation selon l'une des revendications précédentes, caractérisé en ce que la couche capillaire (2, 12) consiste en une matière frittée, une toile métallique ou analogue et elle est liée au côté extérieur du canal (1, 10, 10') par brasage, soudage, collage ou analogue.

13. Réfrigérant par évaporation selon l'une des revendications précédentes, caractérisé en ce que les orifices de sortie des raccords pour le liquide (7, 17) sont répartis à la surface extérieure du ou de chaque canal (1, 10, 10') de manière que le liquide soit réparti uniformément dans la couche capillaire (2, 12) par cette surface extérieure.

14. Réfrigérant par évaporation selon l'une des revendications précédentes, caractérisé en ce que le flux du liquide émergeant des orifices de sortie est dirigé ou dévié par des dispositifs auxiliaires (déflecteurs 8, 18) de manière qu'il pénètre dans la couche capillaire (2) tangentiellement à la surface extérieure du ou de chaque canal (1).

15. Réfrigérant par évaporation selon l'une des revendications précédentes, caractérisé en ce que les raccords pour le liquide (7, 17) sont formés de petits tubes capillaires traversant la paroi des conduits (6, 11, 11') et dont la résistance hydraulique est modifiable par le choix de la longueur et/ou du diamètre de manière que soit obtenue la distribution souhaitée du liquide.

16. Réfrigérant par évaporation selon l'une des revendications précédentes, caractérisé en ce qu'un tube auxiliaire (9), par lequel le fluide arrive ou est évacué lorsque le canal (1) est conformé en doigt et raccordé d'un côté, se trouve dans un canal (1).

17. Réfrigérant par évaporation selon l'une des revendications précédentes, caractérisé en ce que des conduits auxiliaires ayant des orifices d'entrée correspondants sont prévus pour faire refluer le liquide de la couche capillaire.

18. Réfrigérant par évaporation selon l'une des revendications précédentes, caractérisé en ce que les canaux (1, 10, 10') et conduits (6, 11, 11') d'un élément monté en doigt et renfermant plusieurs canaux et conduits sont utilisés en conduits d'arrivée et de reflux de fluide et/ou du liquide.

19. Réfrigérant par évaporation selon l'une des revendications 3 à 18, caractérisé en ce que la couche d'arrêt du liquide est formée d'une imprégnation non mouillable ou d'un enduit poreux non mouillable de la surface extérieure de la couche capillaire.

FIG.1

EP 0 326 833 B1

# FIG.2

# FIG.3